# EUROPÄISCHE PATENTSCHRIFT

(11) **EP 3 401 147 B1**
(45) Veröffentlichungstag und Bekanntmachung des Hinweises auf die Patenterteilung: **17.11.2021**
(21) Anmeldenummer: 18170520.3
(22) Anmeldetag: 03.05.2018
(51) Int. Cl.: B60K 26/02, B60W 50/16, B60W 50/00

(54) **SYSTEM UND VERFAHREN ZUR VORAUSSCHAUENDEN GESCHWINDIGKEITSBEEINFLUSSUNG EINES KRAFTFAHRZEUGS**
SYSTEM AND METHOD FOR PREDICTIVE INFLUENCE ON THE SPEED OF A MOTOR VEHICLE
SYSTÈME ET PROCÉDÉ DESTINÉS À INFLUENCER LA VITESSE D'UN VÉHICULE AUTOMOBILE DE MANIÈRE PRÉVISIONNELLE

(30) Priorität: 11.05.2017 DE 102017004536
(43) Veröffentlichungstag der Anmeldung: 14.11.2018
(73) Patentinhaber: ZF Active Safety GmbH, 56070 Koblenz (DE)
(72) Erfinder: Freund, Christian, 56581 Melsbach (DE)
(74) Vertreter: ZF Friedrichshafen AG

(56) Entgegenhaltungen:
- EP-A2- 2 881 298
- EP-A2- 3 012 144
- DE-A1-102009 045 710
- DE-A1-102012 213 321
- DE-A1-102014 211 736
- US-A1- 2012 277 949

## Beschreibung

### Hintergrund

Hier werden ein System zur vorausschauenden Geschwindigkeitsbeeinflussung eines Kraftfahrzeugs und ein entsprechendes Verfahren offenbart. Dieses System und das Verfahren sind insbesondere einsetzbar, um in fahrergelenkten Kraftfahrzeugen den Fahrer unterstützen. Details hierzu sind in den Ansprüchen definiert; auch die Beschreibung und die Zeichnung enthalten relevante Angaben zum System und zur Funktionsweise sowie zu Varianten des Systems und des Verfahrens.

### Technischer Bereich

Der Energie- oder Kraftstoffverbrauch von Kraftfahrzeugen im Straßenverkehr ist maßgeblich davon beeinflusst, wie vorausschauend das Kraftfahrzeug betrieben wird, also wie frühzeitig mögliche externe Einflüsse auf die eigene Fahrsituation erkannt werden, um angemessen darauf reagieren zu können. Vorausschauendes Fahren zeichnet sich unter anderem durch die Einhaltung eines angemessenen Sicherheitsabstands aus. Dadurch kann früher auf Fehlverhalten anderer Verkehrsteilnehmer reagiert und zum Beispiel können Vollbremsungen vermieden werden, wenn ein anderer Verkehrsteilnehmer dem eigenen Kraftfahrzeug die Vorfahrt nimmt. Vermiedene Bremsbetätigungen vermindern den Energie- oder Kraftstoffverbrauch des eigenen Kraftfahrzeugs, da eine Wiederbeschleunigung des Kraftfahrzeugs entfallen kann. Ebenso kann durch vorausschauendes Fahren die Berücksichtigung unterschiedlicher Zustände der vorausliegenden Fahrbahn oder das Fahren in hügeligem Gelände in einer den Energie- oder Kraftstoffverbrauch verringernden Weise erfolgen.

Das Dokument DE 10 2005 045 049 A1 offenbart beispielsweise eine Navigationseinrichtung für Fahrzeuge zur Unterstützung einer energieoptimierten Fahrweise. Die Navigationseinrichtung dient dazu, dem Fahrer des Fahrzeugs aufgrund von geographischen Gegebenheiten und/oder der Verkehrssituation optisch oder akustisch anzuzeigen, ob das Fahrzeug abgebremst oder beschleunigt werden muss oder ohne Gaseingriff weiterfahren kann.

Ferner offenbart das Dokument DE 10 2010 021 558 A1 ein Fahrerassistenzsystem mit einer Einrichtung zur Erkennung von Verkehrszeichen. Anhand dieser Erkennung stellt das Fahrerassistenzsystem dem Fahrer eines Fahrzeugs Informationen zur Verfügung, die dem Fahrer signalisieren, dass eine weitere Betätigung des Gaspedals nicht erforderlich bzw. sinnvoll ist, um so den Kraftstoffverbrauch des Fahrzeugs zu reduzieren.

Das Dokument DE 10 2015 005 902 A1 offenbart einen Ampelassistenten für ein Kraftfahrzeug, der ohne Verwendung einer separaten Ampelkamera Rückschlüsse auf eine Ampelschaltung zu ziehen und daraus ein Geschwindigkeitsprofil für das eigenen Kraftfahrzeug zu erstellen. Hierdurch soll ein verbrauchsoptimiertes und komfortables Passieren der Ampel ermöglicht werden.

Das Dokument EP 3 012 144 A2 beschreibt ein Verfahren zur Steuerung einer einstellbaren Rückstellkraft auf ein Fahrpedal eines Kraftfahrzeugs, um den Fahrer besser auf eine verbrauchsoptimale Betriebsweise des Kraftfahrzeugs hinzuweisen. Die Rückstellkraft ist in Abhängigkeit von Topographiedaten der vorausliegenden Fahrstrecke variabel einstellbar. Die Topographiedaten werden von einem Navigationssystem oder von einer Topographiedaten-Speichereinrichtung bereitgestellt.

Das Dokument DE 10 2012 213 321 A1 beschreibt ein Verfahren und eine Vorrichtung zum Betreiben eines Fahrzeugs, welche basierend auf Informationen eines Navigationssystems ein verbessertes Ausrollen des Fahrzeugs ermöglichen. Dazu wird während eines Ausrollens ein vorausberechneter Ausrollverlauf auf Abweichungen überwacht. Basierend darauf werden korrektive Maßnahmen eingeleitet, so dass eine gewünschte Zielgeschwindigkeit an einer bestimmten Streckenposition möglichst präzise getroffen wird.

### Zugrundeliegendes Problem

Kraftfahrer erreichen nicht immer den in einer Fahrsituation optimalen Energie- oder Kraftstoffverbrauch, weil ihr Fahrstil nicht genügend vorausschauend ist. So führt zum Beispiel ein zu spätes Entlasten des Fahrpedals (Gaspedals) zur Geschwindigkeitsreduzierung dazu, dass in einer konkreten Fahrsituation die Geschwindigkeit des eigenen Fahrzeugs noch zu hoch ist. Deshalb ist vom Fahrer unmittelbar nach dem Entlasten des Fahrpedals auch noch das Bremspedal zu betätigen, um die gewünschte oder angemessene Fahrzeuggeschwindigkeit zu erreichen. Derartiges Fahrverhalten führt zu einem erhöhten Energie- oder Kraftstoffverbrauch.

Obgleich die vorstehend diskutierten Dokumente des Standes der Technik Fahrerassistenzsysteme vorschlagen, die einen Energie- oder Kraftstoffverbrauch durch Unterstützung einer vorausschauenden Fahrweise reduzieren sollen, besteht ein Bedarf darin, diese Systeme einerseits hinsichtlich der konkreten Unterstützung des Fahrers und andererseits in Bezug auf eine aktuelle Fahrsituation weiter zu verbessern.

### Vorgeschlagene Lösung

Ein System / ein Verfahren zur vorausschauenden Geschwindigkeitsbeeinflussung eines Kraftfahrzeugs unterstützt den Fahrer des eigenen Kraftfahrzeugs dabei, das eigene Kraftfahrzeug vorausschauender zu führen, und durch geeignete Maßnahmen Vollbremsungen zu vermeiden, unterschiedliche Zustände der vorausliegenden Fahrbahn oder das Fahren in hügeligem Gelände, etc. zu berücksichtigen. Das erfindungsgemäße System und Verfahren sind in den unabhängigen Ansprüchen definiert.

Dieses System und das Verfahren zur vorausschauenden Geschwindigkeitsbeeinflussung des Kraftfahrzeugs basiert auf einer Umfeldsensorik des eigenen Kraftfahrzeugs und/oder auf (Land-/Straßen-)Karten kombiniert mit einer aktuellen Positionsbestimmung des eigenen Kraftfahrzeugs. Die Umfeldsensorik des eigenen Kraftfahrzeugs kann gestützt sein auf Radar, Lidar, (Tageslicht- oder Infrarot-)Kamera, Ultraschall, oder dergl. und/oder auf Kartenmaterial, das kombiniert sein kann mit einer aktuellen Postionsbestimmung des eigenen Kraftfahrzeugs. Diese Positionsbestimmung kann zum Beispiel ein satellitengestütztes Navigationsgerät liefern. Die Umfeldsensorik und/oder die Positionsbestimmung sind dazu eingerichtet, den Verlauf der aktuell befahrenen Straße sowie die Position des eigenen Kraftfahrzeugs auf der Straße ermitteln. In dem System des Kraftfahrzeugs kann ein Bremspedal vorgesehen sein, das dazu eingerichtet ist, dass ihm der Fahrer einen Verzögerungswunsch zur Verzögerung des eigenen Kraftfahrzeugs als eine Bremskraft aufprägt. Des Weiteren ist in dem System des Kraftfahrzeugs ein Fahrpedal vorgesehen, das dazu eingerichtet ist, dass ihm der Fahrer einen Geschwindigkeitswunsch zur Erhöhung der Geschwindigkeit des eigenen Fahrzeugs als eine Kraft aufprägt. Diesem Fahrpedal ist ein Aktuator zugeordnet, der dazu eingerichtet ist, dem Fahrpedal gezielt eine der vom Fahrer aufgeprägten Kraft entgegengerichtete Gegenkraft aufzuprägen. Ein Maß dieser Gegenkraft liefert eine Steuerung des Systems des eigenen Kraftfahrzeugs. Diese Steuerung ist vorgesehen und dazu eingerichtet, wiederholt die Verkehrssituation vor dem eigenen Kraftfahrzeug zu ermitteln und auszuwerten und mit einer aktuellen Fahrsituation des eigenen Kraftfahrzeugs zu vergleichen. Außerdem ist die Steuerung vorgesehen und dazu eingerichtet, zu ermitteln, ob eine Verringerung der Geschwindigkeit des eigenen Kraftfahrzeugs unter Berücksichtigung der ermittelten Verkehrssituation vor dem eigenen Kraftfahrzeug in einem festzulegenden Abstand vor dem eigenen Kraftfahrzeug der Verkehrssituation (i) in einem festzulegenden Maß zuträglich und (ii) unter Berücksichtigung der aktuellen Geschwindigkeit des eigenen Kraftfahrzeugs und dem Abstand der ermittelten Verkehrssituation von dem eigenen Kraftfahrzeug ohne Bremseingriff auf eine festzulegende Zielgeschwindigkeit zu verringern ist, und abhängig von der ermittelten Verkehrssituation, dem Fahrpedal eine Gegenkraft aufzuprägen, die im Sinne einer Signalisierung an den Fahrer zu dimensionieren und/oder zu modulieren ist, dass dieser eine von ihm aktuell auf das Fahrpedal aufgeprägte Kraft verringert. Die Steuerung ist in dazu eingerichtet und bestimmt, dass sie, sofern die vom Fahrer aktuell auf das Fahrpedal aufgeprägte Kraft nicht oder nicht ausreichend zum Erreichen der Zielgeschwindigkeit verringert ist, einen aktuellen Geschwindigkeitswunsch des Fahrers nicht berücksichtigt und durch eine Signalisierung an eine Antriebssteuerung des Fahrzeugs, vom Geschwindigkeitswunsch des Fahrers unabhängig, ein Erreichen der Zielgeschwindigkeit des Fahrzeugs bewirkt.

Der festzulegende Abstand vor dem eigenen Kraftfahrzeug, in dem die Verkehrssituation ermittelt wird, kann abhängig von der aktuellen Geschwindigkeit des eigenen Kraftfahrzeugs variieren. Ebenso kann die Häufigkeit, mit der die Verkehrssituation vor dem eigenen Kraftfahrzeug ermittelt und ausgewertet wird, abhängig von der aktuellen Geschwindigkeit des eigenen Kraftfahrzeugs variieren. Faktoren der aktuellen Fahrsituation des eigenen Kraftfahrzeugs können die Geschwindigkeit des eigenen Kraftfahrzeugs, die Steigung / das Gefälle der aktuell befahrenen Straße, der Beladungszustand des eigenen Kraftfahrzeugs, die Reibverhältnisse der aktuell befahrenen Straße, oder dergleichen sein. Das festzulegende Maß der Zuträglichkeit einer Verringerung der Geschwindigkeit des eigenen Kraftfahrzeugs kann von der ermittelten Verkehrssituation insofern abhängen, als zum Beispiel eine besonders kritische Verkehrssituation (etwa eine geschlossene Beschrankung eines Bahnübergangs) vor dem eigenen Kraftfahrzeug ein besonders hohes Maß erfordert, während eine weniger kritische Verkehrssituation (etwa eine Krümmung der Straße mit großem Kurvenradius) vor dem eigenen Kraftfahrzeug nur ein kleines Maß erfordert.

Abhängig von der ermittelten Verkehrssituation wird dem Fahrpedal eine Gegenkraft aufgeprägt, die im Sinne einer Signalisierung an den Fahrer zu dimensionieren und/oder zu modulieren ist. Durch diese Gegenkraft soll dem Fahrer vermittelt werden, dass dieser das Fahrpedal jetzt entlasten soll, um so eine Verringerung der Geschwindigkeit des eigenen Kraftfahrzeugs einzuleiten.

Dieses System ist in der Lage, mit dem Fahrer aktiv zu kommunizieren und ihn bei seinen Fahrgewohnheiten im Sinne der Verkehrssicherheit vorausschauend und energieeffizient zu unterstützen. Mittels eines solchen "aktiven" Fahrpedals erhält der Fahrer eine haptische Rückmeldung zur vorausschauenden Fahrweise angesichts der vor dem eigenen Kraftfahrzeug liegenden Verkehrssituation. Hierzu hat das aktive Fahrpedal einen Aktuator, der dem Fahrpedal gezielt eine zusätzliche Gegenkraft aufprägt. Zum Beispiel kann der Aktuator ab einem bestimmten Fahrerwunsch, welcher einer vorbestimmten Fahrpedallage entspricht, einen variabel einstellbaren Druckpunkt erzeugen, mit dem ein weiteres Niederdrücken des Fahrpedals erschwert ist, jedoch vom Fahrer überdrückbar ist.

So ist aus der DE 10 2012 217 677 A1 ein Kraftfahrzeug bekannt, bei dem das Gaspedal ein aktives Fahrpedal ist, das unter Bildung eines solchen Druckpunktes mit einem, von einem Steuergerät ansteuerbaren Aktuator mit einer zusätzlichen Gegenkraft beaufschlagbar ist.

### Weitere Ausgestaltungen und vorteilhafte Weiterbildungen

Das Steuerungs-System ist in einer Variante dazu eingerichtet und bestimmt, dass der Aktuator am Fahrpedal die Signalisierung an den Fahrer dem Fahrpedal als Gegenkraft in Form von Vibrieren, Klopfen oder als zunehmende Kraft aufprägt.

Die Steuerung ist in einer weiteren Variante dazu eingerichtet und bestimmt, dass sie die Signalisierung an den Fahrer in ihrer Dauer und/oder ihrer Intensität so verändert, dass die Signalisierung ein Maß einer vom Fahrer zu verringernden Betätigung des Fahrpedals repräsentiert.

Die Steuerung ist in einer weiteren Variante dazu eingerichtet und bestimmt, dass sie aus der Umfeldsensorik des eigenen Fahrzeuges, den Karten und/oder der aktuellen Positionsbestimmung des eigenen Fahrzeugs die Verkehrssituation vor dem eigenen Fahrzeug im Hinblick auf Verkehrszeichen, Lichtzeichenanlagen, Stau-Enden, Steigungen, Gefälle, Fahrbahnverengungen ermittelt.

In einer weiteren Variante ist der Aktuator als Elektromagnet ausgestaltet, der mit dem Fahrpedal des Fahrzeugs getrieblich gekoppelt ist.

Ein entsprechendes Steuerungsverfahren zur vorausschauenden Geschwindigkeitsbeeinflussung eines Kraftfahrzeugs hat folgende Schritte:
- wiederholtes Ermitteln und Auswerten einer Verkehrssituation vor dem eigenen Kraftfahrzeug auf der aktuell befahrenen Straße sowie die Position des eigenen Kraftfahrzeugs auf der Straße;
- Vergleichen der ermittelten und ausgewerteten Verkehrssituation mit einer aktuellen Fahrsituation des eigenen Kraftfahrzeugs; und
- Ermitteln, ob eine Verringerung der Geschwindigkeit des eigenen Kraftfahrzeugs unter Berücksichtigung der ermittelten Verkehrssituation vor dem eigenen Kraftfahrzeug in einem festzulegenden Abstand vor dem eigenen Kraftfahrzeug der Verkehrssituation (i) in einem festzulegenden Maß zuträglich und (ii) unter Berücksichtigung der aktuellen Geschwindigkeit des eigenen Fahrzeugs und dem Abstand der ermittelten Verkehrssituation von dem eigenen Fahrzeug ohne Bremseingriff auf eine festzulegende Zielgeschwindigkeit verringerbar ist, und
- Aufprägen einer Gegenkraft auf ein Fahrpedal gegen eine vom Fahrer aufgeprägte Kraft abhängig von der ermittelten Verkehrssituation, wobei die Gegenkraft im Sinne einer Signalisierung an den Fahrer zu dimensionieren und/oder zu modulieren ist, dass dieser eine von ihm aktuell auf das Fahrpedal aufgeprägte Kraft verringert. Sofern die vom Fahrer aktuell auf das Fahrpedal (22) aufgeprägte Kraft nicht oder nicht ausreichend zum Erreichen der Zielgeschwindigkeit (ZG) verringert ist, umfasst das Steuerungsverfahren weiterhin die folgenden Schritte:
- Nichtberücksichtigen eines aktuellen Geschwindigkeitswunsch des Fahrers; und
- Bewirken eines Erreichens der Zielgeschwindigkeit (ZG) des Fahrzeugs (10) durch eine Signalisierung an eine Antriebssteuerung (MM, AS) des Fahrzeugs (10) unabhängig vom Geschwindigkeitswunsch des Fahrers.

### Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen.

Die Abmessungen und Proportionen der in den Fig. gezeigten Komponenten sind hierbei nicht unbedingt maßstäblich; sie können bei zu implementierenden Ausführungsformen vom hier Veranschaulichten abweichen.

### Detaillierte Beschreibung der Zeichnungen

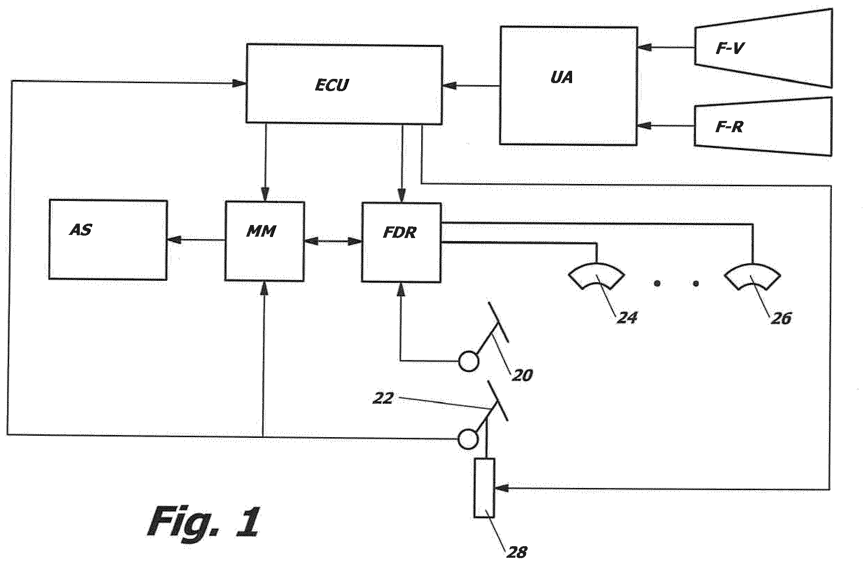

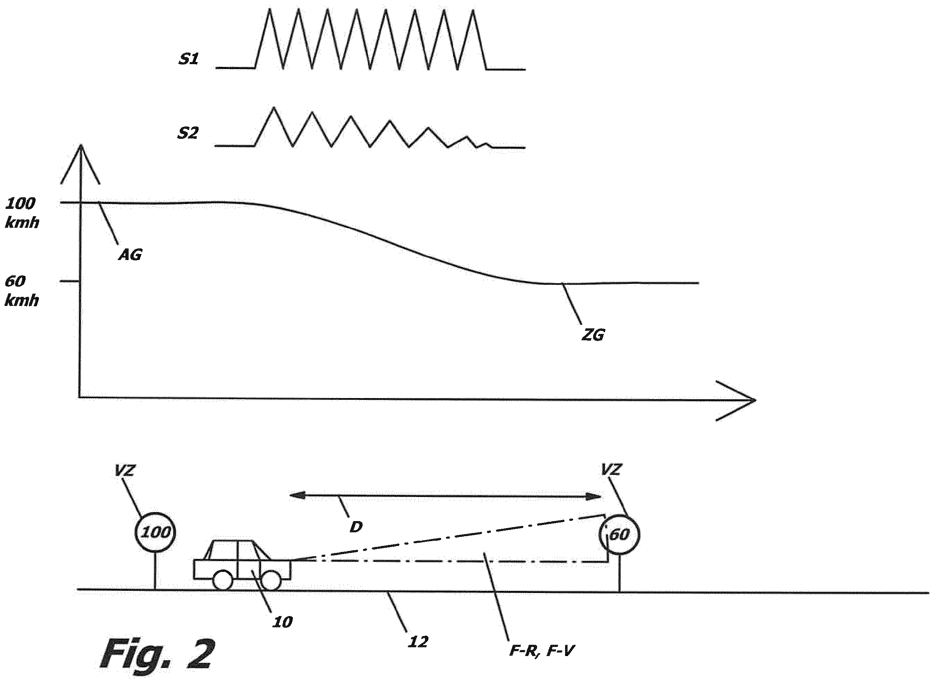

In Fig. 1 ist schematisch eine Fahrsituation gezeigt, bei der ein eigenes (Kraft-)Fahrzeug 10 einen geraden Straßenabschnitt 12 befährt. Ein dem Fahrzeug zugeordnetes Steuerungssystem ECU dient zur vorausschauenden Geschwindigkeitsbeeinflussung des Kraftfahrzeugs. Dieses Steuerungssystem ECU greift auf eine Umfeldsensorik des eigenen Fahrzeuges und auf Straßenkarten kombiniert mit einer aktuellen Positionsbestimmung aus zum Beispiel einem satellitengestützten Navigationssystem zu. Die Umfeldsensorik umfasst in einer Variante hier nicht weiter veranschaulichte Radarsensoren und (Infrarot- und Tageslicht-)(Video-)Kameras, mit denen die Umfeldsituation vor und seitlich des Fahrzeugs 10 erfasst und ausgewertet wird. Mit dieser Umfeldsensorik und der Positionsbestimmung wird der Verlauf der aktuell befahrenen Straße sowie die Position des eigenen Fahrzeuges auf der Straße ermitteln und dem Steuerungssystem ECU fortlaufend bereitgestellt. Das Steuerungssystem ECU umfasst einen nicht näher veranschaulichten Rechner, Programm-/Daten-Speicher, Ein-/Ausgabeeinrichtungen, etc.

In dem System des Kraftfahrzeugs 10 kann ein Bremspedal 20 vorgesehen sein, dem der Fahrer einen Verzögerungswunsch zur Verzögerung des eigenen Kraftfahrzeugs 10 als eine Bremskraft aufprägen kann. Dieser Verzögerungswunsch des Fahrers wird durch das Bremspedal 20 erfasst und in einer Fahrdynamikregelung FDR - zusammen mit anderen Daten aus dem Fahrzeugbetrieb - in entsprechende Ansteuersignale für Radbremsen 24, ... 26 des Kraftfahrzeugs 10 umgesetzt, um die Drehzahl nicht weiter veranschaulichter Räder des Kraftfahrzeugs 10 zu verringern.

Des Weiteren ist in dem System des Kraftfahrzeugs 10 ein Fahrpedal 22 vorgesehen, dem der Fahrer einen Geschwindigkeitswunsch zur Erhöhung der Geschwindigkeit des eigenen Fahrzeugs als eine Kraft aufprägen kann. Diesem Fahrpedal 22 ist ein Aktuator 28 zugeordnet, um dem Fahrpedal 22 gezielt eine der vom Fahrer aufgeprägten Kraft entgegengerichtete Gegenkraft aufzuprägen. Ein Maß dieser Gegenkraft liefert die Steuerung ECU des Systems des eigenen Kraftfahrzeugs 10 durch entsprechende Ansteuersignale für den Aktuator 28. In der veranschaulichten Variante ist der Aktuator 28 als Elektromagnet ausgestaltet, der mit dem Fahrpedal des Fahrzeugs getrieblich gekoppelt ist.

Die - nachstehend detaillierter erläuterte - Steuerung ECU in dem Steuerungssystem ermittelt mithilfe einer Umweltauswertung UA wiederholt die Verkehrssituation vor dem eigenen Kraftfahrzeug 10 und wertet diese aus. Die Umweltauswertung UA ist dazu eingerichtet, Verkehrszeichen VZ zu erkennen, aus cloud-Anwendungen (zum Beispiel Google maps) Routeninformationen (Straßenverlauf, Steigungen, Gefälle, ...) Lichtzeichenanlagen, Fahrbahnverengungen oder Stausituationen zu erkennen, durch Radar-/Bild- Auswertungen auf der Fahrbahn befindliche Personen zu erkennen, und mit einer aktuellen Fahrsituation des eigenen Kraftfahrzeugs 10 zu vergleichen. Faktoren der aktuellen Fahrsituation des eigenen Kraftfahrzeugs 10 sind die Geschwindigkeit des eigenen Kraftfahrzeugs 10, die Steigung / das Gefälle der aktuell befahrenen Straße 12, der Beladungszustand des eigenen Kraftfahrzeugs 10, die Reibverhältnisse der aktuell befahrenen Straße 12, oder dergleichen.

Zur Implementierung des vorausschauenden Fahrens und der vorausschauenden Geschwindigkeitsbeeinflussung ermittelt die Steuerung ECU, ob eine Verringerung der Geschwindigkeit des eigenen Kraftfahrzeugs 10 unter Berücksichtigung der ermittelten Verkehrssituation vor dem eigenen Kraftfahrzeug 10 in einem festzulegenden Abstand vor dem eigenen Kraftfahrzeug 10 der Verkehrssituation in einem festzulegenden Maß zuträglich und unter Berücksichtigung der aktuellen Geschwindigkeit AG des eigenen Kraftfahrzeugs 10 und dem Abstand D der ermittelten Verkehrssituation von dem eigenen Kraftfahrzeug 10 ohne Bremseingriff von einer aktuellen Geschwindigkeit AG auf eine festzulegende Zielgeschwindigkeit ZG zu verringern ist.

Der in der Steuerung ECU festzulegende Abstand A vor dem eigenen Kraftfahrzeug, in dem die Verkehrssituation ermittelt wird, variiert abhängig von der aktuellen Geschwindigkeit des eigenen Kraftfahrzeugs, der Erfassungsreichweite der Umfeldsensorik F-R, F-V, die Sichtverhältnisse, etc. Auch die Häufigkeit, mit der die Verkehrssituation vor dem eigenen Kraftfahrzeug 10 ermittelt und ausgewertet wird, variiert abhängig von der aktuellen Geschwindigkeit des eigenen Kraftfahrzeugs 10. Bei niedrigerer Geschwindigkeit kann eine niedrigere Auswertehäufigkeit ausreichend sein. Das in der Steuerung ECU festzulegende Maß der Zuträglichkeit einer Verringerung der Geschwindigkeit des eigenen Kraftfahrzeugs hängt von der ermittelten Verkehrssituation insofern ab, als zum Beispiel eine besonders kritische Verkehrssituation vor dem eigenen Kraftfahrzeug ein besonders hohes Maß erfordert, während eine weniger kritische Verkehrssituation vor dem eigenen Kraftfahrzeug nur ein kleines Maß erfordert. In der Fig. ist deshalb beispielhaft eine durch ein Verkehrszeichen VZ angezeigte Geschwindigkeitsreduzierung veranschaulicht, was ein mittleres Maß der Zuträglichkeit der Verringerung der Geschwindigkeit repräsentiert.

Die - nachstehend detaillierter erläuterte - Steuerung ECU in dem Steuerungssystem ermittelt mithilfe einer Umweltauswertung UA wiederholt die Verkehrssituation vor dem eigenen Kraftfahrzeug 10 und wertet diese aus. Die Umweltauswertung UA ist dazu eingerichtet, Verkehrszeichen VZ zu erkennen, aus cloud-Anwendungen (zum Beispiel Google maps) Routeninformationen (Straßenverlauf, Steigungen, Gefälle, ...) Lichtzeichenanlagen, Fahrbahnverengungen oder Stausituationen zu erkennen, durch Radar-/Bild- Auswertungen auf der Fahrbahn befindliche Personen zu erkennen, und mit einer aktuellen Fahrsituation des eigenen Kraftfahrzeugs 10 zu vergleichen. Faktoren der aktuellen Fahrsituation des eigenen Kraftfahrzeugs 10 sind die Geschwindigkeit des eigenen Kraftfahrzeugs 10, die Steigung / das Gefälle der aktuell befahrenen Straße 12, der Beladungszustand des eigenen Kraftfahrzeugs 10, die Reibverhältnisse der aktuell befahrenen Straße 12, oder dergleichen.

Zur Implementierung des vorausschauenden Fahrens und der vorausschauenden Geschwindigkeitsbeeinflussung ermittelt die Steuerung ECU, ob eine Verringerung der Geschwindigkeit des eigenen Kraftfahrzeugs 10 unter Berücksichtigung der ermittelten Verkehrssituation vor dem eigenen Kraftfahrzeug 10 in einem festzulegenden Abstand vor dem eigenen Kraftfahrzeug 10 der Verkehrssituation in einem festzulegenden Maß zuträglich und unter Berücksichtigung der aktuellen Geschwindigkeit AG des eigenen Kraftfahrzeugs 10 und dem Abstand D der ermittelten Verkehrssituation von dem eigenen Kraftfahrzeug 10 ohne Bremseingriff von einer aktuellen Geschwindigkeit AG auf eine festzulegende Zielgeschwindigkeit ZG zu verringern ist.

Wenn nun die Steuerung ECU unter Berücksichtigung der ermittelten Verkehrssituation vor dem eigenen Kraftfahrzeug 10 und der aktuellen Geschwindigkeit AG des eigenen Kraftfahrzeugs 10 und dem Abstand D der ermittelten Verkehrssituation vor dem eigenen Kraftfahrzeug 10 ermittelt, dass es möglich ist, die Fahrzeuggeschwindigkeit ohne Bremseingriff von einer aktuellen Geschwindigkeit AG auf die festzulegende Zielgeschwindigkeit ZG zu verringern, wird der Aktuator 28 in einer Weise mit Signalen S1 oder S2 beaufschlagt, dass er dem Fahrpedal 22 eine Gegenkraft aufprägt. Diese dem Fahrpedal 22 aufgeprägte Gegenkraft ist so dimensioniert und moduliert, dass der Fahrer sie im Sinne einer Aufforderung versteht, die von ihm aktuell auf das Fahrpedal 22 aufgeprägte Kraft zu verringern. Durch die Entlastung des Fahrpedals 22 soll eine Verringerung der Geschwindigkeit des eigenen Kraftfahrzeugs eingeleitet werden, ohne dass es notwendig ist, das Bremspedal zu betätigen. Der Aktuator 28 prägt am Fahrpedal 22 die Signalisierung S1, S2 an den Fahrer in Form von Vibrieren, Klopfen oder als zunehmende Kraft auf.

Eine aktuelle (Winkel-)Stellung des Fahrpedals 22 wird einem Motormanagement MM des Kraftfahrzeugs 10 übermittelt, welche daraus (und aus anderen Faktoren) ein Ansteuersignal (zum Beispiel ein Drosselklappenstellungssignal eines Verbrennungsmotors) für den Anstriebsstrang AS des Kraftfahrzeugs 10 erzeugt.

Sofern der Fahrer das Fahrpedal 22 trotz der durch den Aktuator 28 aufgeprägten Gegenkraft nicht entlastet, wird dieses durch das Fahrpedal 22 an die Steuerung ECU signalisiert. Die Steuerung ECU ist für den Fall, dass die vom Fahrer aktuell auf das Fahrpedal aufgeprägte Kraft nicht oder nicht ausreichend zum Erreichen der Zielgeschwindigkeit verringert ist, dazu eingerichtet, einen aktuellen Geschwindigkeitswunsch des Fahrers nicht zu berücksichtigen und durch eine Signalisierung an eine Antriebssteuerung (Motormanagement, Antriebsstrang MM, AS) des Fahrzeugs 10, vom Geschwindigkeitswunsch des Fahrers unabhängig, ein Erreichen der Zielgeschwindigkeit ZG des Fahrzeugs 10 zu bewirken. Mit anderen Worten wird der Geschwindigkeitswunsch des Fahrers auf das Fahrpedal 22 ignoriert und von der Steuerung ECU die Wirksamkeit des Geschwindigkeitswunsches des Fahrers zurückgenommen/unterbunden, bis die Zielgeschwindigkeit ZG erreicht ist.

Die vorangehend beschriebenen Varianten sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

## Patentansprüche

1. Ein Steuerungssystem zur vorausschauenden Geschwindigkeitsbeeinflussung, basierend auf einer Umfeldsensorik (F-V, F-R) eines eigenen Kraftfahrzeugs (10) und/oder auf Karten kombiniert mit einer aktuellen Positionsbestimmung, wobei
- die Umfeldsensorik (F-V, F-R) und/oder die Positionsbestimmung dazu eingerichtet sind, auf der aktuell befahrenen Straße (12) die Verkehrssituation vor dem eigenen Kraftfahrzeug (10) sowie die Position des eigenen Kraftfahrzeugs (10) auf der Straße (12) ermitteln;
- ein Fahrpedal (22) vorgesehen ist, das dazu eingerichtet ist, dass ihm der Fahrer einen Geschwindigkeitswunsch zur Erhöhung der Geschwindigkeit des eigenen Kraftfahrzeugs (10) als eine Kraft aufprägt;
- das Fahrpedal (22) einen Aktuator (28) aufweist, der dazu eingerichtet ist, dem Fahrpedal (22) gezielt eine der vom Fahrer aufgeprägten Kraft entgegengerichtete Gegenkraft aufzuprägen;
- eine Steuerung (ECU) vorgesehen und dazu eingerichtet ist;
-- wiederholt die Verkehrssituation vor dem eigenen Kraftfahrzeug (10) zu ermitteln und auszuwerten und mit einer aktuellen Fahrsituation des eigenen Kraftfahrzeugs (10) zu vergleichen und
-- zu ermitteln, ob eine Verringerung der Geschwindigkeit des eigenen Kraftfahrzeugs (10) unter Berücksichtigung der ermittelten Verkehrssituation vor dem eigenen Kraftfahrzeug (10) in einem festzulegenden Abstand vor dem eigenen Kraftfahrzeug (10) der Verkehrssituation (i) in einem festzulegenden Maß zuträglich und (ii) unter Berücksichtigung der aktuellen Geschwindigkeit (AG) des eigenen Fahrzeugs (10) und dem Abstand (D) der ermittelten Verkehrssituation von dem eigenen Fahrzeug (10) ohne Bremseingriff auf eine festzulegende Zielgeschwindigkeit (ZG) verringerbar ist; und
-- abhängig von dem Ermitteln dem Fahrpedal (22) eine Gegenkraft aufzuprägen, die im Sinne einer Signalisierung (S1, S2) an den Fahrer zu dimensionieren und/oder zu modulieren ist, dass dieser eine von ihm aktuell auf das Fahrpedal (22) aufgeprägte Kraft verringert, wobei die Steuerung (ECU) dazu eingerichtet ist, sofern die vom Fahrer aktuell auf das Fahrpedal (22) aufgeprägte Kraft nicht oder nicht ausreichend zum Erreichen der Zielgeschwindigkeit (ZG) verringert ist, einen aktuellen Geschwindigkeitswunsch des Fahrers nicht zu berücksichtigen und durch eine Signalisierung an eine Antriebssteuerung (MM, AS) des Fahrzeugs (10), vom Geschwindigkeitswunsch des Fahrers unabhängig, ein Erreichen der Zielgeschwindigkeit (ZG) des Fahrzeugs (10) zu bewirken.

2. Steuerungssystem zur vorausschauenden Geschwindigkeitsbeeinflussung nach Anspruch 1, wobei der Aktuator (28) am Fahrpedal (22) die Signalisierung (S1, S2) an den Fahrer dem Fahrpedal (22) als Gegenkraft in Form von Vibrieren, Klopfen oder als zunehmende Kraft aufprägt.

3. Steuerungssystem zur vorausschauenden Geschwindigkeitsbeeinflussung nach Anspruch 1 oder 2, wobei die Steuerung (ECU) die Signalisierung (S1, S2) an den Fahrer in ihrer Dauer und/oder ihrer Intensität so verändert, dass die Signalisierung (S1, S2) ein Maß einer vom Fahrer zu verringernden Betätigung des Fahrpedals (22) repräsentiert.

4. Steuerungssystem zur vorausschauenden Geschwindigkeitsbeeinflussung nach Anspruch 1, 2 oder 3, wobei die Steuerung (ECU) dazu eingerichtet ist, aus der Umfeldsensorik (F-V, F-R) des eigenen Fahrzeuges (10), den Karten und/oder der aktuellen Positionsbestimmung des eigenen Fahrzeugs (10) die Verkehrssituation vor dem eigenen Fahrzeug (10) im Hinblick auf Verkehrszeichen (VZ), Lichtzeichenanlagen, Stau-Enden, Steigungen, Gefälle, Fahrbahnverengungen, zu ermitteln.

5. Steuerungssystem zur vorausschauenden Geschwindigkeitsbeeinflussung nach einem der Ansprüche 1 bis 4, wobei der Aktuator (28) als Elektromagnet ausgestaltet ist, der mit dem Fahrpedal (22) des Fahrzeugs (10) getrieblich gekoppelt ist.

6. Steuerungssystem zur vorausschauenden Geschwindigkeitsbeeinflussung nach einem der Ansprüche 1 bis 5, wobei die Steuerung (ECU) vorgesehen und dazu eingerichtet ist, den festzulegenden Abstand vor dem eigenen Kraftfahrzeug (10), in dem die Verkehrssituation ermittelt wird, abhängig von der aktuellen Geschwindigkeit (AG) des eigenen Kraftfahrzeugs (10) zu variieren.

7. Steuerungssystem zur vorausschauenden Geschwindigkeitsbeeinflussung nach einem der Ansprüche 1 bis 6, wobei die Steuerung (ECU) vorgesehen und dazu eingerichtet ist, die Häufigkeit, mit der die Verkehrssituation vor dem eigenen Kraftfahrzeug (10) ermittelt und ausgewertet wird, abhängig von der aktuellen Geschwindigkeit (AG) des eigenen Kraftfahrzeugs (10) zu variieren.

8. Ein Steuerungsverfahren zur vorausschauenden Geschwindigkeitsbeeinflussung eines Kraftfahrzeugs (10), mit den Schritten:
- wiederholtes Ermitteln und Auswerten einer Verkehrssituation vor dem eigenen Kraftfahrzeug (10) auf der aktuell befahrenen Straße (12) sowie die Position des eigenen Kraftfahrzeugs (10) auf der Straße (12);
- Vergleichen der ermittelten und ausgewerteten Verkehrssituation mit einer aktuellen Fahrsituation des eigenen Kraftfahrzeugs (10); und
- Ermitteln, ob eine Verringerung der Geschwindigkeit des eigenen Kraftfahrzeugs (10) unter Berücksichtigung der ermittelten Verkehrssituation vor dem eigenen Kraftfahrzeug (10) in einem festzulegenden Abstand vor dem eigenen Kraftfahrzeug (10) der Verkehrssituation (i) in einem festzulegenden Maß zuträglich und (ii) unter Berücksichtigung der aktuellen Geschwindigkeit (AG) des eigenen Fahrzeugs (10) und dem Abstand (D) der ermittelten Verkehrssituation von dem eigenen Fahrzeug (10) ohne Bremseingriff auf eine festzulegende Zielgeschwindigkeit (ZG) verringerbar ist,
- Aufprägen einer Gegenkraft auf ein Fahrpedal (22) des Kraftfahrzeugs (10) gegen eine vom Fahrer aufgeprägte Kraft abhängig von der ermittelten Verkehrssituation, wobei die Gegenkraft im Sinne einer Signalisierung (S1, S2) an den Fahrer zu dimensionieren und/oder zu modulieren ist, dass dieser eine von ihm aktuell auf das Fahrpedal (22) aufgeprägte Kraft verringert, wobei, sofern die vom Fahrer aktuell auf das Fahrpedal (22) aufgeprägte Kraft nicht oder nicht ausreichend zum Erreichen der Zielgeschwindigkeit (ZG) verringert ist, und wobei, sofern die vom Fahrer aktuell auf das Fahrpedal (22) aufgeprägte Kraft nicht oder nicht ausreichend zum Erreichen der Zielgeschwindigkeit (ZG) verringert ist, das Steuerungsverfahren weiterhin die folgenden Schritte umfasst:
- Nichtberücksichtigen eines aktuellen Geschwindigkeitswunsch des Fahrers; und
- Bewirken eines Erreichens der Zielgeschwindigkeit (ZG) des Fahrzeugs (10) durch eine Signalisierung an eine Antriebssteuerung (MM, AS) des Fahrzeugs (10) unabhängig vom Geschwindigkeitswunsch des Fahrers.

## Claims

1. Control system for predictively influencing the speed, based on a driving environment sensor system (F-V, F-R), of an ego motor vehicle (10) and/or on maps, combined with a current position determination, wherein
- the driving environment sensor system (F-V, F-R) and/or the position determination are configured for determining the traffic situation ahead of the ego motor vehicle (10) on the road (12) currently being travelled, as well as the position of the ego motor vehicle (10) on the road (12);
- an accelerator pedal (22) is provided, configured for the driver applying to it a speed intent, for increasing the speed of the ego vehicle (10), as a force;
- the accelerator pedal (22) has an actuator (28), configured for a counterforce, opposite the force applied by the driver, being applied to the accelerator pedal (22) in a targeted manner;
- a controller (ECU) is provided and configured for:
-- repeatedly determining and evaluating the traffic situation ahead of the ego motor vehicle (10) and comparing it with a current driving situation of the ego motor vehicle (10) and
-- determining whether a reduction in the speed of the ego motor vehicle (10), taking into account the determined traffic situation ahead of the ego motor vehicle (10) at a distance to be established ahead of the ego motor vehicle (10), (i) is beneficial to the traffic situation to an extent to be established and (ii) can be reduced to a target speed (ZG) to be established, without braking intervention, taking into account the current speed (AG) of the ego motor vehicle (10) and the distance (D) of the determined traffic situation from the ego motor vehicle (10); and
-- depending on the determination, applying to the accelerator pedal (22) a counterforce which is to be dimensioned and/or modulated in the sense of signalling (S1, S2) to the driver that he/she is to reduce a force currently being applied by him/her to the accelerator pedal (22),
wherein, if the force currently being applied to the accelerator pedal (22) by the driver has not been reduced or not been reduced sufficiently to reach the target speed (ZG), the controller (ECU) is configured not to take into account a current speed intent of the driver and to bring about reaching of the target speed (ZG) of the vehicle (10) by signalling to a drive controller (MM, AS) of the vehicle (10), independently of the speed intent of the driver.

2. Control system for predictively influencing the speed according to Claim 1, wherein the actuator (28) on the accelerator pedal (22) applies the signalling (S1, S2) to the driver to the accelerator pedal (22) as a counterforce in the form of vibrating, knocking or as an increasing force.

3. Control system for predictively influencing the speed according to Claim 1 or 2, wherein the controller (ECU) changes the signalling (S1, S2) to the driver in its duration and/or its intensity such that the signalling (S1, S2) represents an extent of an actuation of the accelerator pedal (22) to be reduced by the driver.

4. Control system for predictively influencing the speed according to Claim 1, 2 or 3, wherein the controller (ECU) is configured for determining the traffic situation ahead of the ego vehicle (10) with regard to traffic signs (VZ), traffic lights, ends of traffic jams, uphill grades, downhill grades, narrowing roadways, from the driving environment sensor system (F-V, F-R) of the ego vehicle (10), the maps and/or the current position determination of the ego vehicle (10).

5. Control system for predictively influencing the speed according to one of Claims 1 to 4, wherein the actuator (28) is designed as an electromagnet, which is coupled by gearing to the accelerator pedal (22) of the vehicle (10).

6. Control system for predictively influencing the speed according to one of Claims 1 to 5, wherein the controller (ECU) is provided and configured for varying the distance to be established ahead of the ego motor vehicle (10) in which the traffic situation is determined, depending on the current speed (AG) of the ego motor vehicle (10).

7. Control system for predictively determining the speed according to one of Claims 1 to 6, wherein the controller (ECU) is provided and configured for varying the frequency with which the traffic situation ahead of the ego motor vehicle (10) is determined and evaluated, depending on the current speed (AG) of the ego motor vehicle (10).

8. Control method for predictively influencing the speed of a motor vehicle (10), with the steps of:
- repeatedly determining and evaluating a traffic situation ahead of the ego motor vehicle (10) on the road (12) currently being travelled, as well as the position of the ego motor vehicle (10) on the road (12);
- comparing the determined and evaluated traffic situation with a current driving situation of the ego motor vehicle (10); and
- determining whether a reduction in the speed of the ego motor vehicle (10), taking into account the determined traffic situation ahead of the ego motor vehicle (10) at a distance to be established ahead of the ego motor vehicle (10), (i) is beneficial to the traffic situation to an extent to be established and (ii) can be reduced to a target speed (ZG) to be established, without braking intervention, taking into account the current speed (AG) of the ego motor vehicle (10) and the distance (D) of the determined traffic situation from the ego motor vehicle (10) ;
- depending on the traffic situation determined, applying to an accelerator pedal (22) of the motor vehicle (10) a counterforce against a force applied by the driver, wherein the counterforce is to be dimensioned and/or modulated in the sense of signalling (S1, S2) to the driver that he/she is to reduce a force currently being applied by the driver to the accelerator pedal (22), wherein, if the force currently being applied to the accelerator pedal (22) by the driver has not been reduced or not been reduced sufficiently to reach the target speed (ZG), and wherein, if the force currently being applied to the accelerator pedal (22) by the driver has not been reduced or not been reduced sufficiently to reach the target speed (ZG), the control method also comprises the following steps:
- not taking into account a current speed intent of the driver; and
- bringing about reaching of the target speed (ZG) of the vehicle (10) by signalling to a drive controller (MM, AS) of the vehicle (10) independently of the speed intent of the driver.

## Revendications

1. Système de commande destiné à exercer une influence prédictive sur une vitesse en se basant sur un ensemble de capteurs d'environnement (F-V, F-R) d'un véhicule automobile concerné (10) et/ou sur des cartes combinées à une détermination de position actuelle,
- l'ensemble de capteurs d'environnement (F-V, F-R) et/ou la détermination de position étant conçus pour déterminer, sur la route actuellement empruntée (12), la situation de circulation devant le véhicule automobile concerné (10) et la position du véhicule automobile concerné (10) sur la route (12) ;
- une pédale d'accélérateur (22) étant prévue qui est conçue pour que le conducteur lui communique sous la forme d'une force une vitesse souhaitée afin d'augmenter la vitesse du véhicule automobile concerné (10) ;
- la pédale d'accélérateur (22) comportant un actionneur (28) qui est conçu pour communiquer à la pédale d'accélérateur (22) de manière ciblée une force antagoniste qui s'oppose la force communiquée par le conducteur ;
- une commande (ECU) étant prévue et conçue pour ;
-- déterminer et évaluer de manière répétée la situation de circulation devant le véhicule automobile concerné (10) et la comparer à une situation de conduite actuelle du véhicule automobile concerné (10) et
- déterminer si une réduction de la vitesse du véhicule automobile concerné (10), avec prise en compte de la situation de circulation déterminée devant le véhicule automobile concerné (10) à une distance à spécifier devant le véhicule automobile concerné (10), (i) est bénéfique à la situation de circulation dans une mesure à spécifier et (ii) peut être amenée à une vitesse cible à spécifier (ZG) sans intervention de freinage avec prise en compte de la vitesse actuelle (AG) du véhicule automobile concerné (10) et de la distance (D) de la situation de circulation déterminée au véhicule automobile concerné (10) ; et
-- en fonction de la détermination, communiquer à la pédale d'accélérateur (22) une force antagoniste qui est à dimensionner et/ou à moduler au sens d'une signalisation (S1, S2) au niveau du conducteur de manière à ce que ledit conducteur réduise une force qu'il communique actuellement à la pédale d'accélérateur (22),
la commande (ECU) étant conçue pour, dans la mesure où la force actuellement communiquée par le conducteur à la pédale d'accélérateur (22) n'est pas réduite ou est insuffisamment réduite pour atteindre la vitesse cible (ZG), ne pas prendre en compte une vitesse souhaitée actuelle du conducteur et, par une signalisation à une commande d'entraînement (MM, AS) du véhicule (10), indépendamment de la vitesse souhaitée par le conducteur, amener le véhicule (10) à atteindre la vitesse cible (ZG).

2. Système de commande destiné à exercer une influence prédictive sur une vitesse selon la revendication 1, l'actionneur (28) au niveau de la pédale d'accélérateur (22) communiquant la signalisation (S1, S2) au niveau du conducteur à la pédale d'accélérateur (22) sous la forme d'une force antagoniste telle qu'une vibration, un cognement ou une force croissante.

3. Système de commande destiné à exercer une influence prédictive sur une vitesse selon la revendication 1 ou 2, la commande (ECU) modifiant la signalisation (S1, S2) au niveau du conducteur en termes de durée et/ou d'intensité de sorte que la signalisation (S1, S2) représente une mesure d'un actionnement de la pédale d'accélérateur (22) qui doit être réduit par le conducteur.

4. Système de commande destiné à exercer une influence prédictive sur une vitesse selon la revendication 1, 2 ou 3,
la commande (ECU) étant conçue pour déterminer à partir de l'ensemble de capteurs d'environnement (F-V, F-R) du véhicule concerné (10), des cartes et/ou de la détermination de la position actuelle du véhicule concerné (10) la situation de circulation devant le véhicule concerné (10) en tenant compte des panneaux de signalisation (VZ), des feux de circulation, des extrémités embouteillées, des pentes, des descentes, des voies rétrécies.

5. Système de commande destiné à exercer une influence prédictive sur une vitesse selon l'une des revendications 1 à 4, l'actionneur (28) étant conçu comme un électro-aimant qui est couplé en transmission à la pédale d'accélérateur (22) du véhicule (10).

6. Système de commande destiné à exercer une influence prédictive sur une vitesse selon l'une des revendications 1 à 5, la commande (ECU) étant prévue et conçue pour faire varier la distance à spécifier devant le véhicule automobile concerné (10), à laquelle la situation de circulation est déterminée, en fonction de la vitesse actuelle (AG) du véhicule automobile concerné (10).

7. Système de commande destiné à exercer une influence prédictive sur une vitesse selon l'une des revendications 1 à 6, la commande (ECU) étant prévue et conçue pour faire varier la fréquence, à laquelle la situation de circulation devant le véhicule automobile concerné (10) est déterminée et évaluée, en fonction de la vitesse actuelle (AG) du véhicule automobile concerné (10).

8. Procédé de commande destiné à exercer une influence prédictive sur une vitesse d'un véhicule automobile (10), le procédé comprenant les étapes suivantes :
- déterminer et évaluer de manière répétée une situation de circulation devant le véhicule automobile concerné (10) sur la route actuellement empruntée (12) et la position du véhicule automobile concerné (10) sur la route (12) ;
- comparer la situation de circulation déterminée et évaluée à une situation de conduite actuelle du véhicule automobile concerné (10) ; et
- déterminer si une réduction de la vitesse du véhicule automobile concerné (10), avec prise en compte de la situation de circulation déterminée devant le véhicule automobile concerné (10) à une distance à spécifier devant le véhicule automobile concerné (10), (i) est bénéfique à la situation de circulation dans une mesure à spécifier et (ii) peut être amenée à une vitesse cible à spécifier (ZG) sans intervention de freinage avec prise en compte de la vitesse actuelle (AG) du véhicule automobile concerné (10) et de la distance (D) de la situation de circulation déterminée au véhicule automobile concerné (10) ; et
- communiquer à une pédale d'accélérateur (22) du véhicule automobile (10) une force antagoniste, qui s'oppose à une force communiquée par le conducteur, en fonction de la situation de circulation déterminée, la force antagoniste devant être dimensionnée et/ou modulée au sens d'une signalisation (S1, S2) au niveau du conducteur de manière à ce que ledit conducteur réduise une force qu'il communique actuellement à la pédale d'accélérateur (22),
dans la mesure où la force actuellement communiquée par le conducteur à la pédale d'accélérateur (22) n'est pas réduite ou est insuffisamment réduite pour atteindre la vitesse cible (ZG), et dans la mesure où la force actuellement communiquée par le conducteur à la pédale d'accélérateur (22) n'est pas réduite ou est insuffisamment réduite pour atteindre la vitesse cible (ZG), le procédé de commande comprenant en outre le étapes suivantes :
- ne pas prendre en compte une vitesse souhaitée actuelle du conducteur ; et
- amener le véhicule (10) à atteindre la vitesse cible (ZG) par une signalisation à une commande d'entraînement (MM, AS) du véhicule (10), indépendamment de la vitesse souhaitée par le conducteur.
